**Europäisches Patentamt**

**European Patent Office**

**Office européen des brevets**

(19)

(11) Veröffentlichungsnummer: **0 000 872**
**B1**

(12) **EUROPÄISCHE PATENTSCHRIFT**

(45) Veröffentlichungstag der Patentschrift: **10.06.81**

(51) Int. Cl.³: **B 29 H 3/08, B 29 H 3/00**

(21) Anmeldenummer: **78100521.0**

(22) Anmeldetag: **22.07.78**

(54) Verfahren zur Herstellung von Formkörpern aus Gummimischungen in Pulverform.

(30) Priorität: **25.08.77 DE 2738308**

(43) Veröffentlichungstag der Anmeldung:
**07.03.79 Patentblatt 79/5**

(45) Bekanntmachung des Hinweises auf die Patenterteilung:
**10.06.81 Patentblatt 81/23**

(84) Benannte Vertragsstaaten:
**BE DE FR GB NL**

(56) Entgegenhaltungen:
**DE - A - 2 166 744**
**GB - A - 1 032 786**

**JOURNAL OF THE I.R.I., Band 6, Nr. 2, April 1972, Tenterden,**
**T.R. GOSHORN "Powdered rubber technology—the renaissance of rubber mixing," Seiten 77 — 80**

**KUNSTOFFTECHNIK, Band 9, Nr. 3, März 1970, Mainz,**
**J.P. LEHNEN "Verarbeitung von Kautschukmischungen auf Einschnecken-Extrudern," Seiten 89—93**

**RAPRA ABSTRACTS, Band 11, Nr. 31, Juli 1974, H.A.J. DE KROM "Powdered rubber future technology: processing and advantages of powdered nitrile rubbers," Nr. 24815L**

(73) Patentinhaber: **BAYER AG**
**Zentralbereich Patente, Marken und Lizenzen**
**D-5090 Leverkusen 1, Bayerwerk (DE)**

(72) Erfinder: **Lehnen, Jozef Peter**
**Domblick 14**
**D-5090 Leverkusen 31 (DE)**
Erfinder: **Zingelmann, Gerd**
**Düsseldorfstrasse 33**
**D-5090 Leverkusen (DE)**

# 0 000 872

Verfahren zur Herstellung von Formkörpern aus Gummimischungen in Pulverform

Gegenstände aus vulkanisiertem Gummi werden im allgemeinen hergestellt, indem man sie aus plastischen, kompakten Kautschukmischungen vorformt und dann durch Erhitzen vulkanisiert. Kautschukmischungen in diesem Sinn sind homogene Gemische aus Kautschuken und Füllstoffen (Verstärkerfüllstoffen wie Ruß), Vulkanisationsmitteln und Hilfsstoffen. Um solche Mischungen zu Formlingen zu verformen, bedient man sich u. a. des Spritzgießens. Dieses Verfahren ist z.B. zur Verarbeitung von thermoplastischen Kunststoffen sehr gut entwickelt.

Für die Verarbeitung von Gummimischungen nach diesem Verfahren bestehen zwei grundsätzliche Schwierigkeiten. Einmal sind Gummimischungen (insbesondere hitzevulkanisierbare) gegen starkes Erwärmen empfindlich — sie vulkanisieren dann vorzeitig — zum anderen können Gummimischungen nicht, wie etwa thermoplastische Kunststoffe, aufgeschmolzen werden, sondern sie werden zur Verarbeitung nur plastifiziert. Die erste Schwierigkeit setzt der thermischen und mechanischen Belastbarkeit der Mischungen enge Grenzen, die zweite Schwierigkeit zwingt dazu, Verarbeitungsmaschinen, insbesondere Schneckenextruder und Spritzgießmaschinen, mit Kautschukmischungen in homogen gemischter und vollständig kompaktierter Form zu beschicken.

Andererseits stehen Gummimischungen seit einiger Zeit auch in Form von Pulvern zur Verfügung ("pulverförmige Fertigmischungen"). Diese physikalische Form besitzt als Gemenge entscheidende Vorteile, insbesondere fertigungstechnischer Art; für die Weiterverarbeitung solcher pulverförmigen Fertigmischungen ist man bisher auf eine speziell ausgestaltete Zwischenkompaktierung des Gemenges angewiesen. In "Kunststofftechnik" 9 (1970) Nr. 3, Seite 89 ff. wird über die Verarbeitung von Kautschukmischungen auf Einwellenextrudern berichtet. Man kann für die Kautschuke Einfüllöffnungen vorsehen, die einen Hinterschnitt besitzen (vergl. Figur 3 auf S. 93), aber die Vorrichtungen werden nur benutzt zur Verarbeitung von endlosen Kautschukfellen, die auf Walzwerken oder Kalandern hergestellt werden. Pulverförmige Kautschukmischungen werden nicht in Betracht gezogen.

Ziel der vorliegenden Erfindung ist, ein Verfahren anzugeben, die es gestatten, aus Gummimischungen in Pulverform ("pulverförmige Fertigmischungen") direkt vulkanisierbare Formkörper herzustellen.

Gegenstand der Erfindung ist somit ein Verfahren zur Herstellung von kompakten, geformten Gebilden aus vulkanisierbaren Gummimischungen mit Hilfe einer Schneckenplastiziereinheit, in welche die Gummimischung zuerst durch eine förderwirksame Einzugstasche, in Form eines Hinterschnittes im Zylinder, eingebracht, dann in einer Mischzone plastiziert, und durch Vereinigung der plastizierten Teilchen unter Druck kompaktiert wird, das dadurch gekennzeichnet ist, daß der Einzugstasche (3) die Gummimischung in Pulverform zugeführt wird, und daß dann die Gummimischung im plastizierten und kompaktierten Zustand verformt wird, um direkt vulkanisierbare Formkörper herstellen zu können.

Die Vorrichtung zur Durchführung des Verfahrens ist eine Schneckenplastiziereinheit mit Einfüllvorrichtung und einer nachgeschalteten Spritzform. Sie besitzt einen langen Hinterschnitt im Zylinder der Schneckenmaschine und eine Schneckenwelle mit Förderteil, Mischteil und Austragsteil.

Diese Vorrichtung ist in der Lage, die pulverförmige Gummimischung aufzunehmen; ohne förderwirksamen Hinterschnitt im Zylinder wäre dies nicht möglich. Ferner erlaubt die Vorrichtung, die einmal aufgenommene Mischung zu kompaktieren, zu plastizieren, und anschließend zu homogenisieren, Dies erfordert eine Zone, die starke Mischwirkung hat, und in der die Pulverteilchen plastiziert werden und unter Bildung eines homogenen Gemisches ihre Struktur verlieren.

Der förderwirksame Hinterschnitt im Zylinder kann beispielsweise wie folgt ausgestaltet sein:

Die innere Zylinderwand im Einzugsbereich kann senkrecht und/oder bis zu einem Neigungswinkel von 25° zur Schneckenachse hinterschliffen sein. Der Hinterschliff ist im Zylindergrund 4—6 mm tief und läuft in Förderrichtung in derselben rechtsgängigen Steigung schraubenförmig wie die Schnecke bis max. 270° zur Zylindermitte hin aus.

Eine bevorzugte Welle für den Schneckenextruder kann wie folgt beschaffen sein:

Sie besitzt eine ein- oder mehrgängige Förderzone, eine oder mehrere daran anschließende Scher- und/oder Mischzonen bekannter Art, die das Fördergut (pulverförmige Kautschukmischung) rasch unter Druck setzen und unter langsamer Entspannung walken lassen, eine Mischzone, in der schraubenförmige Stege, gegebenenfalls mit variabler Steigung, schraubenförmigen Nutten mit größerer Steigung überlagert sind, wobei ein oder mehrere Gänge vorhanden sein können, gegebenenfalls eine weitere Scherzone, und eine fördernde Austragzone.

Bevorzugt besitzt die Welle ein Verhältnis Länge : Durchmesser (1/d) von ca. 12 bis 20, und die einzelnen Zonen haben etwa folgende Längen (ausgedruckt als Vielfache des Durchmessers):

| Förderzone | 6—10 |
| Scherzone | 1— 3 |
| Mischzone | 2— 5 |
| [Scherzone] | 1— 3 |
| Austragszone | 2 |

In einer besonders bevorzugten Ausführungsform hat die Schneckenwelle eine besondere Oberflächenausbildung: die Stege, die mit dem Gehäuse in Berührung stehen, sind vollständig glatt, während die Flanken und der Schneckengrund aufgerauht sind. Man kann dies durch Sandstrahlen der Schneckenwelle erreichen; günstiger und dauerhafter ist eine Ätzung der Oberfläche mit nachfolgender Härtung. Es können dadurch unregelmäßige Vertiefungen in, beispielsweise, 0,01 — 1 mm Tiefe und Durchmesser entstehen. Die Vertiefungen können auch länglich sein und eine Vorzugsrichtung (z.B. die Richtung des Materialflusses durch die Schnecke) haben.

Die Figur 1 gibt das Prinzip der gesamten Vorrichtung im Längsschnitt wieder. Es bedeuten:

(1) Einfüllvorrichtung mit Rührwerk (2);

(3) Einzugstasche;

(4) Schnecke;

(5) Mischzonen;

(6) Austragszone.

Figur 2 gibt einen längsschnitt in der Achse A—B. Die Einzugstasche (3) ist dautlich erkennbar.

Das erfindungsgemäße Verfahren läßt sich im Prinzip auf sämtliche Kautschumischungen in Pulverform anwenden. Bevorzugt sind jedoch Mischungen aus:

Polychloropren, Butadien-Acrylnitril-Mischpolymerisate, Styrol-Butadien-Mischpolymerisate, Polybutadien, Naturkautschuk, Äthylen-Propylen-Terpolymerisate als Kautschuk, die Füllstoffe wie Ruß, Vulkanisationshilfsmittel, Stabilisatoren, Alterungs- und Ozonschutzmittel, gegebenenfalls Weichmacheröle und Faktis bereits enthalten.

Das erfindungsgemäße Verfahren vermeidet nicht nur die bisher erforderliche Zwischenplastizierung, es belastent auch das eingesetzte Kautschukmaterial weniger, so daß einwandfreie Formkörper und bessere Vulkanisate erhalten werden.

Das folgende Ausführungsbeispiel erläutert das Verfahren:

| Gummimischung: | Gew.-Tle |
| --- | --- |
| Nitrilkautschuk (Butadien-Acrylnitril-Copolymer | 100 |
| Füllstoffe | 105 |
| Vulkanisationshilfsmittel | 8 |
| Weichmacher | 25 |
| Alterungsschutzmittel | 3 |

Die Mischung liegt vor als rieselfähiges Pulver mit Korngräßen von 0,1 bis 2 mm.

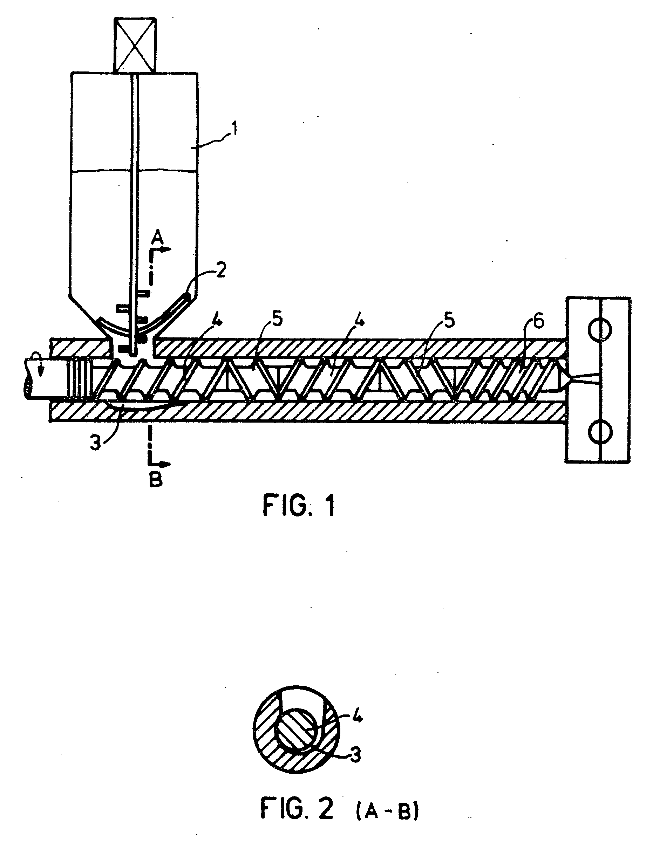

Die Mischung wird in einer Vorrichtung gemäß Figur 1 kompaktiert und homogenisiert und in der angeschlossenen 10-fach-Spritzform zu Schulterschutzstücken für Photoumhängetaschen verformat und bei 160° bis 200°C 90 Sekunden in der Form vulkanisiert.

**Patentansprüche**

1. Verfahren zur Herstellung von kompakten, geformten Gebilden aus vulkanisierbaren Gummimischungen mit Hilfe einer Schneckenplastiziereinheit, in welche die Gummimischung zuerst durch eine förderwirksame Einzugstasche (3), in Form eines Hinterschnittes im Zylinder, eingebracht, dann in einer Mischzone (5), plastiziert, und durch Vereinigung der plastizierten Teilchen unter Druck kompaktiert wird, dadurch gekennzeichnet, daß der Einzugstasche (3) die Gummimischung in Pulverform zugeführt

3

## 0 000 872

wird, und daß dann die Gummimischung im plastizierten und kompaktierten Zustand verformt wird, um direkt vulkanisierbare Formkörper herstellen zu können.

2. Verfahren nach Anspruch 1, dadurch gekennzeichnet, daß durch Spritzgießen verformt wird.

## Revendications

1. Procédé de fabrication d'articles moulés compactés en des mélanges de caoutchouc vulcanisables à l'aide d'une unité de plastification à vis sans fin dans laquelle le mélange de caoutchouc est d'abord introduit à travers une poche d'alimentation à effet de transport (3), sous forme d'une dépression dans le cylindre, puis est plastifié dans une zone de mélange (5) et est compacté par réunion des particules plastifiées sous pression, caractérisé en ce qu'à la poche d'alimentation (3) est amené le mélange de caoutchouc sous une forme pulvérulente et en ce qu'alors le mélange de caoutchouc est moulé à l'état plastifié et compacté pour pouvoir fabriquer directement des corps moulés vulcanisables.

2. Procédé selon la revendication 1, caractérisé en ce que le moulage est effectué suivant la méthode de moulage par injection.

## Claims

1. Process for the production of compact, shaped articles from vulcanisable rubber mixtures by means of a screw plasticising unit, into which the rubber mixture is first introduced through a delivery-active feed pocket (3), in the form of an undercut in the barrel, is then plasticised in a mixing zone (5), and compacted by combining the plasticised particles under pressure, characterised in that the rubber mixture is introduced into the feed pocket (3) in powder form, and in that the rubber mixture is then shaped in plasticised and compacted form in order to be able to produce directly vulcanisable moulded products.

2. Process according to claim 1, characterised in that shaping is conducted by injection moulding.

FIG. 1

FIG. 2 (A-B)